(19) **Europäisches Patentamt European Patent Office Office européen des brevets**

(11) **EP 1 384 574 B1**

(12) **EUROPEAN PATENT SPECIFICATION**

(45) Date of publication and mention
of the grant of the patent:
**27.05.2009 Bulletin 2009/22**

(21) Application number: **03016910.6**

(22) Date of filing: **24.07.2003**

(51) Int Cl.:
*B32B 21/00* (2006.01)     *B32B 27/04* (2006.01)
*B32B 33/00* (2006.01)     *B27K 3/08* (2006.01)
*B27K 5/00* (2006.01)     *B27K 3/15* (2006.01)
*B27M 1/02* (2006.01)

(54) **Method for manufacturing wood elements for musical instruments, wood elements for musical instruments obtained thereby, and musical instrument therewith**

Verfahren zur Herstellung von Holzbauteilen für Musikinstrumente, so hergestellte Holzbauteile und Musikinstrument

Procédé pour fabriquer des éléments de bois pour des instruments de musique et éléments de bois et instrument de musique obtenus par ce procédé

(84) Designated Contracting States:
**CH DE FR GB IT LI**

(30) Priority: **26.07.2002 JP 2002218759**

(43) Date of publication of application:
**28.01.2004 Bulletin 2004/05**

(73) Proprietor: **YAMAHA CORPORATION**
**Naka-ku**
**Hamamatsu-shi**
**Shizuoka-ken (JP)**

(72) Inventors:
• **Abe, Hiroyasu**
**Hamamatsu-shi,**
**Shizuoka-ken (JP)**

• **Kato, Masayuki**
**Hamamatsu-shi,**
**Shizuoka-ken,**
**(JP)**

(74) Representative: **Emde, Eric et al**
**Wagner & Geyer**
**Gewürzmühlstrasse 5**
**80538 München (DE)**

(56) References cited:
**EP-A- 0 191 196        DE-A- 2 054 730**
**DE-A- 3 735 368        US-A- 4 364 990**

**Description**

BACKGROUND OF THE INVENTION

Field of the Invention

The present invention relates to a method for manufacturing wood elements for musical instruments, wood elements for musical instruments obtained by the manufacturing method, and musical instruments using these wood elements.

Description of the Related Art

Conventionally, natural woods such as granadilla and rosewood are mainly used in the manufacture of a large number of musical instruments, in particular, woodwind instruments such as clarinets. These natural woods are widely used because musical instruments that use natural woods such as these have excellent sound qualities.
However, the following drawbacks occur in musical instruments that use natural woods.

- Woods such as granadilla and rosewood that provide the base material are rare and are currently endangered; consequently, the costs thereof are accordingly high.
- Drying is difficult and a lengthy period (generally, about 3 years) is needed to manufacture a musical instrument. In other words, there is a long lead time.
- There is a low yield (normally, the defect rate is approximately 30%).
- Because natural wood is used, there are differences in coloring, resulting in it being difficult to match colors in a musical instrument that has been assembled from a large number of parts. In addition, there are considerable differences in the properties of the wood, such as the hardness and density thereof, resulting in individual differences being generated in sound quality.
- There is little freedom in external design.
- The musical instruments tend to crack easily due to drying, abrupt changes in temperature, water absorption, and the like so that the instrument requires continual maintenance.

In contrast, artificial materials such as a composite material of granadilla wood powders and epoxy resins, ABS (acrylonitrile - butadiene - styrene copolymer) resins, and acrylic resins are known as materials, other than natural woods, that are used for musical instruments.

When a composite material of granadilla wood powders and epoxy resins is used for a musical instrument, the instrument is resistant to cracking and the yield is excellent. However, although such instruments also have the advantage of there being few individual differences between them, problems such as those given below do occur.

- Granadilla, which provides the base material, is currently endangered, and the cost thereof is accordingly high.
- There is little freedom in external design.
- The sound quality is poor.
- No grain, or the like such as is visible when natural wood is used, can be seen, thereby creating a poor external appearance.

Furthermore, although such instruments are inexpensive and also are water resistant when ABS resins or acrylic resins are used for a musical instrument, the sound quality is poor, and such instruments cannot be used in an orchestra or the like. The external appearance of these instruments also is poor.
The sound quality, in particular, which is of paramount importance in a musical instrument, is extremely inferior in musical instruments formed using these compound materials or artificial materials as compared with musical instruments formed using natural wood.
It can be considered that this poorness in sound quality is affected by the vibration characteristics of the materials being used.
The vibration characteristics that are particularly associated with the sound quality of a woodwind musical instrument are the density thereof and the ratio of the modulus of elasticity in the fiber direction ($E_L$) to the modulus of rigidity in the tangential direction (i.e., the transverse (shearing) modulus of elasticity $G_{TL}$), that is, the ratio of $E_L/G_{TL}$.
$E_L/G_{TL}$ is a value calculated by measuring the dimensions, mass and mode angular frequency of the material using Timoshenko's equation:

$$EI\frac{\partial^4 y}{\partial x^4} + \rho A\frac{\partial^2 y}{\partial t^2} - I\rho\left(1 + \alpha\frac{E}{G}\right)\frac{\partial^4 y}{\partial t^2 \partial x^2} + \partial\frac{I\rho^2}{G}\cdot\frac{\partial^4 y}{\partial t^4} = 0$$

(wherein G represents the lateral (shear) elastic modulus of a material, $\alpha$ represents the shear modulus of the material (for example, $\alpha$ represents 1.5, in the case that the cross sectional shape of the material is rectangular), E represents the longitudinal elastic modulus of the material, $\rho$ represents the density of the material, I represents the cross sectional secondary moment, A represents the cross section of the material, x represents the length of the material, y represents the flexural amplitude, and t represents the time).

The closer the $E_L/G_{TL}$ of a material is to the $E_L/G_{TL}$ of a wood material such as granadilla, the more preferable that material is for use in a musical instrument.

Materials in which both the density and $E_L/G_{TL}$ values are close to each other show very similar vibration characteristics. Therefore, if the values for the density and $E_L/G_{TL}$ of composite materials or artificial materials such as those described above are close to those of woods used in a musical instrument being manufactured, then it is logical that a material that has vibration characteristics close to those of these woods can be created. For example, in the case of granadilla, the density thereof ranges between approximately 1.0 and 1.4 $g/cm^3$ and the $E_L/G_{TL}$ value thereof ranges between approximately 4 and 7.

However, it has hitherto been extremely difficult to adjust the two values of density and $E_L/G_{TL}$ to values suitable for a musical instrument. For example, even if the aforementioned composite material of granadilla wood powders and epoxy resins. ABS resins, acrylic resins, or the like is compressed so as to adjust the density thereof to a predetermined value, there is no relationship between the value of the $E_L/G_{TL}$ and the density, and it is difficult to adjust the value of $E_L/G_{TL}$. Accordingly, in the manufacturing of a material having desirable vibration characteristics, problems arise in that large amounts of labor and time are required, and the cost thereof is high.

SUMMARY OF THE INVENTION

The present invention was conceived in view of the above circumstances, and it is an object thereof to provide a manufacturing method that makes it possible to easily manufacture wood elements for musical instruments that have the advantages described below and that also have vibration characteristics similar to those of natural woods used for musical instruments.

- There is no need to use rare natural woods enabling savings to be made in natural resources and in costs.
- The vibration characteristics that are obtained are extremely similar to those of natural woods used for musical instruments, and a musical instrument made using this method has excellent sound quality.
- Because there are no variations in vibration characteristics and in coloration, there are few individual differences and assembling the individual parts is simple.
- Cracking is suppressed and there is a short lead time.
- There is an improved yield and a reduction in material costs.
- There is a large degree of freedom when designing the exterior.
- The external appearance is excellent.

As a result of extensive research, the present inventors discovered that the above objects could be achieved by compressing and thereby bonding together a laminated body, in which the fiber directions are uniformly aligned, so that the density thereof is a predetermined value within a range of 0.8 to 1.4 $g/cm^3$, and thereby achieved the present invention.

That is, the the present invention provides a method for manufacturing wood elements for musical instruments, comprising: a laminating step in which a resin is coated onto or is impregnated into a plurality of wooden plate units, fiber directions of the wooden plate units are aligned, and the wooden plate units are stacked and are subjected to thermal pressing so as to be bonded together and produce a laminated body, wherein the thermal pressing is conducted by controlling a pressure so that a density of the laminated body is in a range from 0.8 to 1.4 $g/cm^3$.

Moreover, the present invention provides a method for manufacturing wood elements for musical instruments, comprising: a first laminating step in which a resin is coated onto or is impregnated into a plurality of wooden plate units, fiber directions of the wooden plate units are aligned, and the wooden plate units are stacked and are subjected to thermal pressing so as to be bonded together and produce a laminated body; and a second laminating step in which the laminated body thus obtained is sliced along the fiber direction to produce laminated plate units, a resin is coated onto or is impregnated into the laminated plate units thus obtained, fiber directions of the laminated plate units are aligned, and the laminated plate units are stacked and are subjected to thermal pressing so as to be bonded together and produce a second laminated body, wherein the thermal pressing in the second laminating step is conducted by controlling a pressure so that a density of the second laminated body is in a range from 0.8 to 1.4 $g/cm^3$. In the first laminating step, the thermal pressing is conducted by controlling a pressure so that a density of the laminated body is in a range from 0.4 to 0.6 $g/cm^3$.

In the aforementioned method for manufacturing wood elements for musical instruments, a portion of the wooden plate units can be replaced with paper.

Moreover, the present invention provides wood elements for musical instruments obtained using the aforementioned method for manufacturing wood elements for musical instruments.

Moreover, the present invention provides wood elements for musical instruments. comprising laminated wooden plate units, each having aligned fiber directions, a thickness of 20 mm or less, and a density of 0.8 to 1.4 $g/cm^3$.

Moreover, the present invention provides a musical instrument that uses the aforementioned wood elements for musical instruments.

BRIEF DESCRIPTION OF THE DRAWINGS

FIG. 1 is a process drawing showing a first embodiment of the present invention.
FIG. 2 is a process drawing showing a second embodiment of the present invention.
FIG. 3 is a graph showing results of Test Example 1.

DESCRIPTION OF THE PREFERRED EMBODIMENTS

The present invention will now be described in detail.

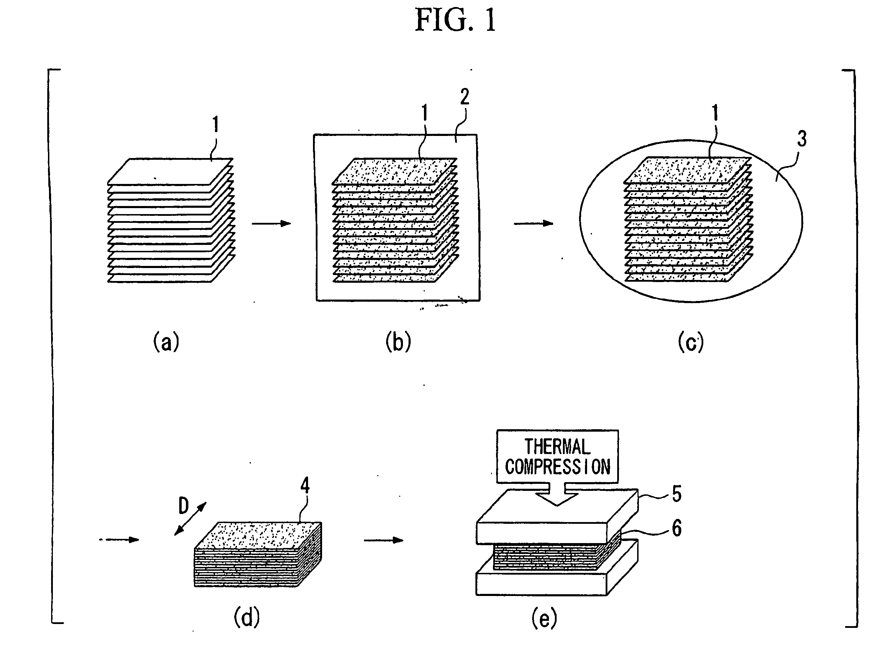

FIG. 1 is a process drawing showing a first embodiment of a method for manufacturing wood elements for musical instruments. In the first embodiment, first, a plurality of wooden plate units 1 are prepared (a). These wooden plate units 1 are then dyed to a desired color by, for example, being immersed in a dye solution 2 that contains a dye, and are then dried (b). The wooden plate units 1 are then, for example, immersed preferably for 1 min. to 24 hours in a resin solution 3 that contains a resin, so that either all or a portion of the wooden plate units 1 becomes impregnated with the resin (c). Alternatively, it is also possible for all or a portion of the wooden plate units 1 to be coated with the resin solution 3. Next, the fiber directions D of each of the wooden plate units 1 are aligned and the wooden plate units 1 are stacked (d) so as to produce a stacked body 4 formed by stacking the plurality of wooden plate units 1 impregnated with the resin.

Next, the stacked body 4 thus obtained undergoes thermal pressing using a suitable pressing apparatus 5 with the pressure of the pressing adjusted so that the density of the entire stacked body is a desired value in the range of 0.8 to 1.4 $g/cm^3$ (e). This results in the resin becoming hardened, causing each of the wooden plate units 1 to bond together and form a wood element (laminated body) 6 having a density of 0.8 to 1.4 $g/cm^3$. When the density of the laminated body 6 is below 0.8 $g/cm^3$, a woodwind instrument, such as a clarinet or the like, made of the laminated body 6 cannot have an excellent sound quality. This is probably because the rigidity of the woodwind instrument is insufficient for supporting the vibrations of air in the wooden pipe of the woodwind instrument. When the density of the laminated body 6 is over 1.4 $g/cm^3$, a musical instrument made of the laminated body 6 becomes too heavy to be easily raised and used.

Preferably, the pressure during the thermal pressing is set to 50 to 300 $kg/cm^2$. Moreover, the temperature is preferably set to 100 to 150 °C.

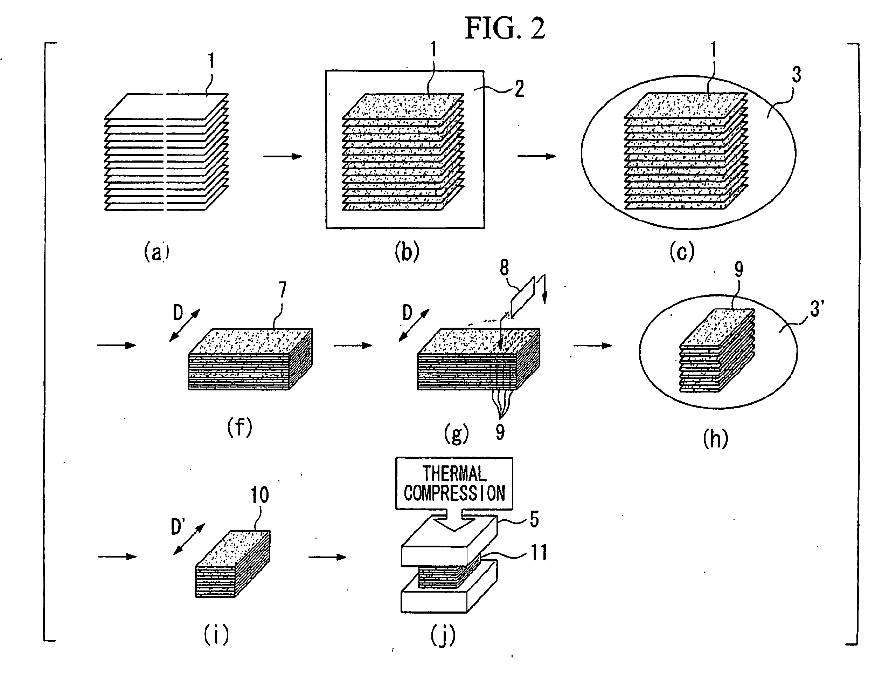

FIG. 2 is a process drawing showing a second embodiment of the manufacturing method of the present invention. Note that in the embodiment described below the same reference symbols are used for component elements that correspond to those of the first embodiment. In the second embodiment, first, a plurality of wooden plate units 1 are prepared (a). These wooden plate units 1 are then dyed to a desired color by, for example, being immersed in a dye solution 2 that contains a dye, and are then dried (b). The wooden plate units 1 are then, for example, immersed preferably for 1 min. to 24 hours in a resin solution 3 that contains a resin so that either all or a portion of the wooden plate units 1 becomes impregnated with the resin (c). Alternatively, it is also possible for all or a portion of the wooden plate units 1 to be coated with the resin solution 3. Next, the fiber directions D of each of the wooden plate units 1 are aligned and the wooden plate units 1 are subjected to thermal pressing and laminating so as to produce a first laminated body 7 formed by laminating and bonding together the plurality of wooden plate units 1 (f). The thermal pressing is conducted by using a suitable pressing apparatus 5 with the pressure of the pressing adjusted so that the density of the laminated body 7 is a desired value in the range of 0.4 to 0.6 $g/cm^3$. Preferably, the pressure of the pressing is set to 10 to 70 $kg/cm^2$. Moreover, the temperature during the thermal pressing is preferably set to 100 to 150 °C.

Next, a slicing process is performed in which the first laminated body 7 thus obtained is sliced vertically on the stack surface along the fiber direction D using a suitable slicing apparatus 8, thereby producing laminated plate units 9 (g). At this time, it is also possible for the laminated body 7 to be sliced at a desired constant angle from the vertical direction instead of being sliced in a vertical direction on the stack surface. The constant angle may be set to 0 to 45 degrees from the vertical direction. When the angle is set to 0 to 45 degrees, each of the obtained laminated plate units 9 can have a structure (cell, summer ring, autumn ring, medullary ray, or the like) similar to that of a natural wood. Therefore, when a musical instrument is made using the laminated plate units 9, a sound quality very similar to that of a musical instrument using a natural wood can be obtained. Moreover, since it is possible to adjust the width of an annual ring of the laminated plate units 9, the musical instrument using the laminated plate units 9 can have an excellent grain and sound quality similar to those of a natural wood.

Either all or a portion of the laminated plate units 9 thus obtained is impregnated with a resin by, for example, being immersed, preferably for 1 min. to 24 hours, in a resin solution 3' that contains the resin (h). The resin contained in the resin solution 3' may be the same as the resin used in the first laminating step or may be different therefrom. It is also possible for the resin solution 3' to be coated on all or a portion of the laminated plate units 9. The fiber directions D' of each of the laminated plate units 9 are then aligned and the laminated plate units 9 are again stacked and are subjected to thermal pressing so as to produce a second laminated body 10 (i). The thermal pressing is undergone by using a suitable pressing apparatus 5 with the pressure of the pressing adjusted so that the density of the entire second laminated body 10 is a desired value in the range of 0.8 to 1.4 $g/cm^3$ (j). Preferably, the pressure of the pressing is set to 50 to 300 $kg/cm^2$. Moreover, the temperature during the thermal pressing is preferably set to 100 to 150 °C. This results in the resin becoming hardened, causing each of the laminated plate units 9 to bond together, and formine a wood element 11 for a musical instrument.

When the density of the second laminated body 10 is below 0.8 $g/cm^3$, a woodwind instrument, such as a clarinet or the like, made of the second laminated body 10 cannot have an excellent sound quality. This is probably because the rigidity of the woodwind instrument is insufficient for supporting the vibrations of air in the wooden pipe of the woodwind instrument. When the density of the second laminated body 10 is over 1.4 $g/cm^3$, a musical instrument made of the second laminated body 10 becomes too heavy to be easily raised and used.

It is also possible to replace a portion of the wooden plate units and laminated plate units used in the above first and second embodiments with a paper and to manufacture a material for a musical instrument by the same method. If paper is used. then, for example, the paper that has been impregnated with the resin may be stacked alternately with the wooden plate units and/or the laminated plate units. These are then pressed so as to harden the resin and cause the plates and the paper to bond together. If the paper is used to replace some of the wooden plate units and/or the laminated plate units, the cost of the materials can be reduced even further. Moreover, the paper has an advantage that, because the process of coating or impregnating the resin into the wooden plate units need not be performed, the process can be further simplified.

There is no particular restriction as to the type of paper that can be used, and the paper may be appropriately selected after considering the strength and the like thereof.

The wood material used for the wooden plate units in the above embodiments is not particularly restricted; however, from the viewpoints of sound radiation properties and cost, as well as of forest conservation, plantation trees such as ayous and poplar are preferable. By using these woods instead of rare woods such as granadilla and rosewood, rare resources can be conserved and a reduction in cost can be achieved.

The thickness of the wooden plates is not particularly restricted; however, plates with a thickness of 0.2 to 1.5 mm are preferable. If the thickness of the wooden plate units is within this range, the sound qualities of wood elements for musical instruments that are obtained are particularly excellent. The dye used for the dyeing is not particularly restricted provided that a dye normally used for coloring wood is used, and may be optionally selected from known dyes.

The dyeing may be performed, for example, by dissolving the dye in water, alcohol, an organic solvent, or the like, and coating or impregnating the wooden plate units with the resulting dye solution.

In the present embodiment, the wooden plate units are dyed in consideration of the external design; however, it is not absolutely necessary to perform this dyeing and the wooden plate units may be left uncolored.

It is also possible to use a pigment instead of a dye for the coloring and to provide a bleaching process as a pre-dyeing process.

The resin that is impregnated or coated is not particularly restricted, provided that a resin normally used as a wood adhesive is used; however, preferably, a thermosetting resin is used.

Specific examples of the thermosetting resin include urea resin, phenol resin, melamine resin and the like; however, preferably, melamine resin is used. Melamine resin is preferable because there is little odor after the resin has hardened.

The method used for coating the resin is not particularly restricted, and both surfaces or at least a portion of one surface of the wooden plate units may be coated using a roller, a brush, or the like. The method used for impregnating the resin is not particularly restricted, and dipping, decompression impregnation, and compression impregnation may be used.

Examples of the slicing apparatus 8 include a slicer and a rotary lathe.

The thickness of the laminated plate units 9 that are formed when the slicing apparatus 8 is used is not particularly restricted; however, it is preferably 0.2 to 1.5 mm. If the wooden plate units that are used have a thickness within this range, the sound qualities of the wood elements for musical instruments that are obtained are particularly excellent.

The density of the wood elements for musical instruments may be adjusted by, for example measuring in advance the width, length, and mass of the laminated body obtained from the laminating step, and then pressing the laminated body until it reaches at a thickness that gives a predetermined density.

The density in the first laminating step that forms the laminated body is preferably 0.4 to 0.6 $g/m^3$, while the density in the second laminating step that forms the second laminated body is preferably 0.8 to 1.4 $g/m^3$.

Examples of the pressing apparatus 5 used when performing the pressing in the laminating step (i.e., both the first laminating step that forms the laminated body and the second laminating step that forms the second laminated body) include a hot plate press, a high frequency press, and a steam press.

However, in the pressing, if the final density is high, a large pressing force is needed. In this case, if the final thickness is 20 mm or more, it is difficult to apply the pressure evenly over the entire laminated body. This makes it difficult to obtain wood elements for musical instruments having a uniform density, and defects such as cracks tend to occur when strong pressure is applied only to some portions. Accordingly, when manufacturing wood elements for musical instruments having a final thickness of 20 mm or more, first, wood elements for musical instruments having a thickness of less than 20 mm are manufactured as described above. The fiber directions of these are then aligned and the wood elements are bonded together by thermal pressing so as to produce wood elements for musical instruments having a thickness of 20 mm or more and having no density variation.

In addition to applying pressure, it is also possible to adjust the density of the wood elements for musical instruments by adjusting the amount of the coated or the impregnated resin. For example, the density can be increased by extending the impregnation time, by increasing the impregnation amount using compression or decompression apparatuses, by raising the density of the resin (monomer, oligomer) in the resin solution, or by lowering the molecular weight of the resin (monomer, oligomer) in order to make the impregnation proceed more easily.

The above described method for manufacturing wood elements for musical instruments negates the need to use rare woods such as granadilla and is therefore valuable in the preservation of rare species. In addition, the lead time necessary for the manufacturing is shorter compared with that when natural wood is used.

There are, moreover, none of the irregularities in properties such as the density and the like that are evident in natural wood, enabling a material having uniform vibration characteristics to be manufactured.

Furthermore, there is a large degree of freedom in external design of the wood elements for musical instruments being manufactured. That is, by changing the color of the plate units or resin layers that are used, a variety of grain effects are possible. Various color effects can also be achieved by performing a coloring process before the lamination process.

When manufacturing a musical instrument using the wood elements obtained as described above, the defect rate is reduced by the present invention to approximately 2 to 3% compared with the defect rate of approximately 30% that occurs when natural wood is used.

The wood elements for musical instruments of the present invention are manufactured by the above described method. The wood elements comprise the laminated wooden plate units, each having aligned fiber directions, a thickness of 20 mm or less, and a density of 0.8 to 1.4 $g/cm^3$. The wood elements have vibration characteristics suitable for materials for a musical instrument. In addition, there is no variation in the properties or color thereof, simplifying the task of assembling a pipe body of a musical instrument. The wood elements for musical instruments of the present invention are particularly suited as a material for manufacturing woodwind instruments such as clarinets, oboes, piccolos, recorders, and the like. In addition, they may also be used as a substitute material for many of the wooden parts used to form a large number of string and percussion instruments.

Musical instruments that use the above wood elements for musical instruments can be manufactured by established methods using the wood elements for musical instruments in place of wood materials normally used. Musical instruments that use the above wood elements for musical instruments have an equivalent or even better sound quality than musical instruments made using natural wood, are low in cost, and have few individual variations.

Examples

The present invention and the effects thereof will now be described specifically using examples; however, it is to be understood that the present invention is in no way limited by these examples.

The density ($\rho$) of the material was measured in the manner described below. Measuring the density ($\rho$)

Thickness, width, length were measured to within 0.01 mm using digital calipers.

Mass was measured to within 0.01 g using an electronic scale.

The density was calculated using these measured values.

Example 1

An aqueous solution of melamine resin was coated over one entire surface of 600 wooden (ayous wood) plate units each having a length of 180 cm, a width of 90 cm, and a thickness of 0.6 mm. The fiber directions of these wooden plate units were then aligned and they were placed in a stack. They then underwent thermal pressing at a temperature of 130 °C and at a pressure of 20 kg/cm$^2$. The melamine resin was consequently hardened and the plates were bonded together to obtain a laminated body. The density of this laminated body was 0.5 g/m$^3$. The laminated body was sliced using a slicer in the fiber direction thereof in a vertical direction relative to the top surface of the stack so that laminated plate units (each having a length of 150 cm, a width of 30 cm, and a thickness of 0.6 mm) were obtained. These laminated plate units were then immersed for 2 hours in an aqueous solution of melamine resin, the same as that used in the above procedure, so that they became impregnated with the melamine resin. These laminated plate units were then aligned in the fiber directions thereof and were stacked, and they were then pressed using a thermal plate press (at a temperature of 130°C and a pressure of 70 kg/cm$^2$). The melamine resin was thereby hardened and wood elements for musical instruments (having a length of 30 cm, a width of 30 cm, and a thickness of 10 mm) were obtained. The density of the wood elements for musical instruments thus obtained was between 1.27 and 1.3 g/cm$^3$.

Example 2

An aqueous solution of melamine resin was coated over one entire surface of 600 wooden (ayous wood) plate units each having a length of 180 cm, a width of 90 cm, and a thickness of 0.6 mm. The fiber directions of these wooden plate units were then aligned and they were placed in a stack. They then underwent thermal pressing at a temperature of 130°C and a pressure of 10 to 20 kg/cm$^2$. The melamine resin was consequently hardened and the plates were bonded together to obtain a laminated body having a density of 0.6 g/cm$^3$. The laminated body was sliced using a slicer in the fiber direction thereof in a vertical direction relative to the top surface of the stack so that laminated plate units (each having a length of 150 cm, a width of 30 cm, and a thickness of 0.25 mm) were obtained. These laminated plate units were then stacked alternately with paper (having a thickness of 0.06 mm) impregnated for one hour with an aqueous solution of melamine resin the same as that used in the above procedure. Note that the fiber directions of these laminated plate units were aligned and then the laminated plate units were stacked. This stack was then pressed using a thermal plate press (at a temperature of 130°C and a pressure of 70 kg/cm$^2$). The melamine resin was thereby hardened and wood elements for musical instruments (each having a length of 30 cm, a width of 30 cm, and a thickness of 10 mm) were obtained. The density of the wood elements for musical instruments thus obtained was approximately 1.37 g/cm$^3$.

Test 1

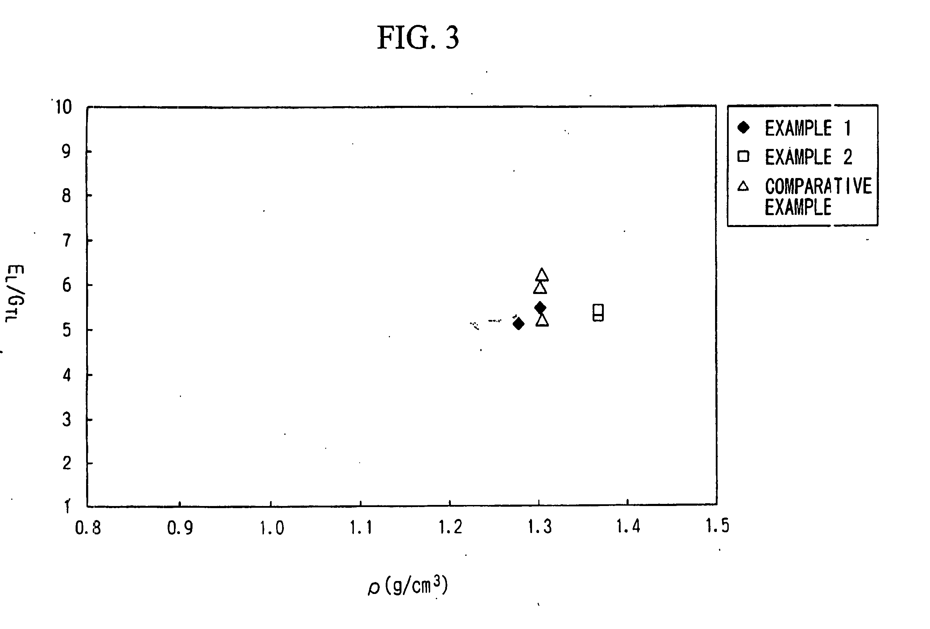

The properties (i.e., the ratio of the modulus of elasticity to the modulus of rigidity $E_L/G_{TL}$) of the wood elements for musical instruments manufactured in the above examples were measured. In addition, to serve as Comparative Example 1, the same measurements were made on granadilla, which is used typically as the material for clarinets and the like.
The method used to measure this $E_L/G_{TL}$ was to measure, using an FFT analyzer, the resonance frequency from mode 0 to mode 3 of the free flexion vibration at both ends according to the free vibration law, and to then calculate the $E_L/G_{TL}$ using the result of Timoshenko's equation.
Note that these measurements were all made indoors at an adjusted temperature of 20°C and relative humidity of 60%. The results obtained are shown in FIG. 3 and Table 1.

Table 1

| | $\rho$ (g/cm$^3$) | $E_L/G_{TL}$ |
|---|---|---|
| Example 1 (plate units) | 1.278 | 5.15 |
| | 1.303 | 5.51 |
| Example 2 (plate units and paper) | 1.369 | 5.45 |
| | 1.369 | 5.36 |
| Comparative Example 1 (granadilla) | 1.306 | 6.27 |
| | 1.303 | 5.98 |
| | 1.306 | 5.25 |

As is clear from these results, the wood elements for musical instruments obtained in Examples 1 and 2 have an $E_L/G_{TL}$ equivalent to that of granadilla.

When the same measurements were made for ABS resin and acrylic resin having a density of $\rho = 1.0$ to $1.1$ g/cm$^3$, the $E_L/G_{TL}$ was between 2 and 3, which is very different from that of granadilla.

Test 2

Clarinets were made using for the wood portions the materials of Examples 1 and 2 and Comparative Example 1, and the sound quality of each was compared.

As a result, it was found that the musical instruments that used the wood elements manufactured in Examples 1 and 2 had a sound quality extremely similar to that of the musical instrument manufactured using granadilla.

According to the method for manufacturing wood elements for musical instruments according to the present invention, it is possible to easily manufacture wood elements for musical instruments having the advantages described below, and having vibration characteristics analogous to those of natural woods that are used for musical instruments.

- There is no need to use rare natural woods, enabling savings to be made in natural resources and in costs.
- The vibration characteristics that are obtained are extremely similar to those of natural woods used for musical instruments, and a musical instrument made using this method has excellent sound quality.
- Because there are no variations in vibration characteristics and in coloration, there are few individual differences and assembling the individual parts is simple.
- Cracking is suppressed and there is a short lead time.
- There is an improved yield and a reduction in material costs.
- There is a large degree of freedom when designing the exterior.
- The external appearance is excellent.

## Claims

1. A method for manufacturing wood elements for musical instruments, comprising: a laminating step in which a resin is coated onto or is impregnated into a plurality of wooden plate units, fiber directions of the wooden plate units are aligned, and the wooden plate units are stacked and are subjected to thermal pressing so as to be bonded together and produce a laminated body,
   wherein the thermal pressing is conducted by controlling a pressure so that a density of the laminated body is in a range from 0.8 to 1.4 g/cm$^3$.

2. A method for manufacturing wood elements for musical instruments, comprising:

   a first laminating step in which a resin is coated onto or is impregnated into a plurality of wooden plate units, fiber directions of the wooden plate units are aligned, and the wooden plate units are stacked and are subjected to thermal pressing so as to be bonded together and produce a laminated body; and
   a second laminating step in which the laminated body thus obtained is sliced along the fiber direction to produce laminated plate units, a resin is coated onto or is impregnated into the laminated plate units thus obtained, fiber directions of the laminated plate units are aligned, and the laminated plate units are stacked and are subjected to thermal pressing so as to be bonded together and produce a second laminated body,
   wherein the thermal pressing in the second laminating step is conducted by controlling a pressure so that a density of the second laminated body is in a range from 0.8 to 1.4 g/cm$^3$.

3. The method for manufacturing wood elements for musical instruments according to claim 2, wherein the thermal pressing in the first laminating step is conducted by controlling a pressure so that a density of the laminated body is in a range from 0.4 to 0.6 g/cm$^3$, in the first laminating step.

4. The method for manufacturing wood elements for musical instruments according to claim 1 or 2, wherein a portion of the wooden plate units is replaced with paper.

5. Wood elements for musical instrument obtainable by using the method for manufacturing wood elements for musical instruments according to claim 1 or 2.

6. Wood elements for musical instruments obtainable by using the method for manufacturing wood elements for musical instruments according to claim 1, comprising laminated wooden plate units, each having aligned fiber directions, a thickness of 20 mm or less, and a density of 0.8 to 1.4 g/cm$^3$.

**7.** A musical instrument that uses the wood elements for musical instruments according to claim 5.

**8.** A musical instrument that uses the wood elements for musical instruments according to claim 6.

**Patentansprüche**

**1.** Verfahren zum Herstellen von Holzelementen für Musikinstrumente, das einen Laminierschritt aufweist, in dem ein Harz auf eine Vielzahl von Holzplatteneinheiten beschichtet oder dahinein imprägniert wird, die Faserrichtungen der Holzplatteneinheiten miteinander ausgerichtet werden, und die Holzplatteneinheiten gestapelt werden und einem thermischen Pressen ausgesetzt werden, so daß sie miteinander verbunden bzw. verklebt werden und einen laminierten Körper bilden, wobei das thermische Pressen durchgeführt wird durch Steuern eines Drucks, so daß die Dichte des laminierten Körpers in einem Bereich von 0,8 bis 1,4 g/cm$^3$ ist.

**2.** Verfahren zum Herstellen von Holzelementen für Musikinstrumente, aufweisend:

einen ersten Laminierschritt, in dem ein Harz auf eine Vielzahl von Holzplatteneinheiten beschichtet oder dahinein imprägniert wird, die Faserrichtungen der Holzplatteneinheiten miteinander ausgerichtet werden, und die Holzplatteneinheiten gestapelt werden und einem thermischen Pressen ausgesetzt werden, so daß sie miteinander verbunden bzw. verklebt werden und einen laminierten Körper bilden; und
einen zweiten Laminierschritt, in dem der so erhaltene laminierte Körper entlang der Faserrichtung geschnitten wird, um laminierte Platteneinheiten zu bilden, ein Harz auf die so erhaltenen laminierten Platteneinheiten beschichtet oder dahinein imprägniert wird, die Faserrichtungen der laminierten Platteneinheiten miteinander ausgerichtet werden, und die laminierten Platteneinheiten gestapelt werden und einem thermischen Pressen ausgesetzt werden, so daß sie miteinander verbunden bzw. verklebt werden und einen zweiten laminierten Körper bilden,

wobei das thermische Pressen des zweiten Laminierschritts durchgeführt wird durch Steuern eines Drucks, so daß die Dichte des zweiten laminierten Körpers in einem Bereich von 0,8 bis 1,4 g/cm$^3$ ist.

**3.** Verfahren zum Herstellen von Holzelementen für Musikinstrumente gemäß Anspruch 2, wobei das thermische Pressen des ersten Laminierschritts durchgeführt wird durch Steuern eines Drucks, so daß die Dichte des laminierten Körpers in dem ersten Laminierschritt in einem Bereich von 0,4 bis 0,6 g/cm$^3$ ist.

**4.** Verfahren zum Herstellen von Holzelementen für Musikinstrumente gemäß Anspruch 1 oder 2, wobei ein Teil der Holzplatteneinheiten durch Papier ersetzt ist.

**5.** Holzelemente für Musikinstrumente, die erhalten werden können-unter Verwendung des Verfahrens zum Herstellen von Holzelementen für Musikinstrumente gemäß Anspruch 1 oder 2.

**6.** Holzelemente für Musikinstrumente, die erhalten werden können unter Verwendung des Verfahrens zum Herstellen von Holzelementen für Musikinstrumente gemäß Anspruch 1 und die laminierte Holzplatteneinheiten aufweisen, die jeweils ausgerichtete Faserrichtungen aufweisen, eine Dicke von 20 mm oder weniger sowie eine Dichte von 0,8 bis 1,4 g/cm$^3$ besitzen.

**7.** Musikinstrument, das die Holzelemente für Musikinstrumente gemäß Anspruch 5 verwendet.

**8.** Musikinstrument, das die Holzelemente für Musikinstrumente gemäß Anspruch 6 verwendet.

**Revendications**

**1.** Procédé de fabrication d'éléments en bois pour instruments de musique comprenant :

une étape de stratification dans laquelle de la résine est déposée sur une pluralité de modules de plaques en bois ou imprégnée dans ceux-ci, les directions de fibre des modules de plaques en bois sont alignées, et les modules de plaques en bois sont empilés et sont soumis à une pression à chaud de façon à les lier les uns aux autres et à produire un corps stratifié ;

dans lequel la pression à haute température est effectuée en contrôlant la pression de sorte que la densité du corps stratifié soit dans une plage de 0,8 à 1,4 g/cm$^3$.

2. Procédé de fabrication d'éléments en bois pour instruments de musique comprenant :

une première étape de stratification dans laquelle de la résine est déposée sur une pluralité de modules de plaques en bois ou imprégnée dans ceux-ci, les directions de fibre des modules de plaques en bois sont alignées, et les modules de plaques en bois sont empilés et sont soumis à une pression à chaud de façon à les lier les uns aux autres et à produire un corps stratifié ; et
une seconde étape de stratification dans laquelle le corps stratifié ainsi obtenu est découpé selon la direction des fibres pour produire des modules de plaques stratifiées, une résine est déposée sur les modules de plaques stratifiées ainsi obtenues ou imprégnée dans ceux-ci, les directions de fibre des modules de plaques stratifiées sont alignées, et les modules de plaques stratifiées sont empilés et sont soumis à une pression à chaud de façon à être liés les uns aux autres et à produire un second corps stratifié ;

dans lequel la pression à chaud dans la seconde étape de stratification est effectuée en commandant la pression de sorte que la densité du second corps stratifié soit dans une plage de 0,8 à 1,4 g/cm$^3$.

3. Procédé de fabrication d'éléments en bois pour instruments de musique selon la revendication 2, dans lequel la pression à chaud lors de la première étape de stratification est effectuée en commandant la pression de sorte que la densité du corps stratifié soit dans une plage de 0,4 à 0,6 g/cm$^3$ lors de la première étape de stratification.

4. Procédé de fabrication d'éléments en bois pour instruments de musique selon la revendication 1 ou 2, dans lequel une partie des modules de plaques en bois est remplacée par du papier.

5. Eléments en bois pour instruments de musique pouvant être obtenus en utilisant le procédé de fabrication d'éléments en bois pour instruments de musique selon la revendication 1 ou 2.

6. Eléments en bois pour instruments de musique pouvant être obtenus en utilisant le procédé de fabrication d'éléments en bois pour instruments de musique selon la revendication 1, comprenant des modules de plaques en bois stratifiées, chacun ayant des directions des fibres alignées, une épaisseur de 20 mm ou moins, et une densité de 0,8 à 1,4 g/cm$^3$.

7. Instrument de musique utilisant les éléments en bois pour instruments de musique selon la revendication 5.

8. Instrument de musique utilisant les éléments en bois pour instruments de musique selon la revendication 6.

FIG. 1

FIG. 2

FIG. 3

EP 1 384 574 B1